# EUROPEAN PATENT SPECIFICATION

(11) **EP 1 689 510 B1**
(45) Date of publication and mention of the grant of the patent: **15.07.2009**
(21) Application number: 04781852.1
(22) Date of filing: 19.08.2004
(51) Int. Cl.: D04H 1/58, D21H 27/08, B01D 39/16, B01D 39/20

(54) **FIBER-FIBER COMPOSITES**
FASER-FASER-VERBUNDWERKSTOFFE
COMPOSITES EN FIBRES-FIBRES

(30) Priority: 07.11.2003 US 518266 P
(43) Date of publication of application: 16.08.2006
(73) Proprietor: KX Technologies LLC, Orange CT 06477 (US)
(72) Inventor: KOSLOW, Evan, E., Weston, CT 06883 (US)
(74) Representative: Volpert, Marcus
(86) International application number: PCT/US2004/027247
(87) International publication number: WO 2005/047597

(56) References cited:
- WO-A-01/93991
- WO-A-91/16119
- WO-A-03/064006
- US-A- 4 859 386
- US-A- 5 019 311
- US-A- 5 393 601
- US-B1- 6 368 504

## Description

The present invention is directed to a composite comprising of at least two types of fibers, preferably nanofibers, wherein one type of fiber binds the other fibers forming a fiber-fiber composite structure having a mean pore diameter of less than about 1 µm.

The document WO 91/16119 A describes a non-woven mat, comprising two different kind of fibers, preferably glass fibers and cellulose acetate fibrids.

### Summary of the Invention

The present invention is directed to a composite flat sheet medium as mentioned in claim 1.

Preferably, the majority fibers or the minority fibers comprise of nanofibers, wherein the nanofibers comprise of glass, polymer, lyocell, cellulose, metal, ceramic, mineral, or combinations thereof. Preferably, the majority fibers comprise glass, polymer, lyocell, cellulose, metal, ceramic, mineral, or combinations thereof. Preferably, the minority fibers comprise a thermoset or thermoplastic polymer. For example, the minority fibers may comprise a polyolefin, polyvinyl alcohol, an acryl i c, or combinations thereof. Preferably, the softening point of the minority fibers is at least 25°C lower than a softening point of the majority fibers.

The composite of the present invention may have a mean pore diameter of the composite is equal to or less than about 0.75 µm; a bubble point that is equal to or less than about 8 µm.

The composite of the present invention may further include a microbiological interception enhancing agent.

In another aspect, the present invention is directed to a filtration system as mentioned in claim 12.

Preferably, the activated carbon filter medium comprises a carbon block having a mean pore diameter of greater than about 1 µm and wherein the filtration system can remove protozoan cysts. Alternatively, the activated carbon filter medium may comprise a flat sheet filter medium having immobilized therein activated carbon particles, alone or in combination with other active agents, between one or more substrates, or admixed with fibers to result in entanglement or bonds with the fibers within the activated carbon filter medium. Preferably, the nanofiber composite is the one or more substrates of the flat sheet filter medium. Also, the activated carbon filter medium may be formed into a spiral wound or pleated flat sheet filter element. The filtration system may further include a particulate prefilter.

Preferably, the nanofiber composite can be a prefilter placed upstream of the activated carbon filter medium. Either or both of the activated carbon filter medium and the nanofiber composite may further include a microbiological interception enhancing agent.

In yet another aspect, the present invention is directed to a method of removing microbiological contaminants from a contaminated liquid as mentioned in claim 24.

The fiber-fiber composite may be a prefilter for the filter medium in a flat sheet, spiral wound or pleated configuration.

Preferably, in the step of providing a filter medium, the filter medium further includes an activated carbon filter medium. The activated carbon filter medium may comprise an activated carbon block, and wherein the fiber-fiber composite is wrapped around the activated carbon block, spiral wound and inserted within a core of the activated carbon block. The activated carbon filter medium may comprise a flat sheet medium comprising activated carbon particles immobilized on a substrate. Preferably, the fiber-fiber composite is a substrate of the flat sheet medium. A particulate prefilter may be added upstream from the activated carbon filter medium. The filter medium and/or the fiber-fiber composite can be treated with a microbiological interception enhancing agent.

### Detailed Description of the Preferred Embodiment(s)

The fiber-fiber composite of the present invention includes majority fibers and minority fibers, wherein the majority fibers are present in an amount greater than the minority fibers. The minority fibers are present as a binder to provide an adhesive force coalescing the majority fibers into the composite structure when the minority fibers are heated to' at least their softening point up to and including their melting point. The fiber-fiber composite of the present invention is useful as a filter medium alone and in combination with traditional filter media such as, for example, activated carbon filter media. The tight pore structure of the fiber-fiber composite of the present invention provides short diffusion distances from a fluid to the surface of the composite by adsorption or diffusive interception making it an excellent medium for fluid filtration. Pre- or post-treatment of the fiber-fiber composite can impart properties such as, for example, hydrophilicity, hydrophobicity, anti-microbial activity, and electrostatic charge. The integrated paper can be formed using, preferably, wet laid paper-making processes for speed and efficiency.

The fiber-fiber composite has a mean pore diameter of less than or equal to about 1 micron, and preferably, less than or equal to about 0.75 micron, more preferably less than or equal to about 0.5 micron, and can be as low as 0.2 microns. The bubble point, largest pore size, of the composite is about 2.0 to about 8.0 microns, but can also be less than about 2.0 microns. The tight pore structure of the composite provides greater than about 99.95% reduction of particulates having a particle size of less than about 5 microns, while having tremendous di rt hol di ng capacity. The fiber-fiber composite preferably has a thickness of about 0.05 to about 0.3 millimeters. The wet strength of the fiber-fiber composite is preferably about 10 to about 30% of the dry strength value, or greater than about 0.013 kg/mm.

### The Fibers in the Fiber-Fiber Composite

The fiber-fiber composite of the present invention includes majority fibers and minority fibers. The minority fibers preferably provide an adhesive force that coalesces the majority fibers into the composite structure, preferably a flat sheet, paper-like structure. The adhesive force necessary to coalesce the majority fibers can be provided by heat and/or modest pressure. As the average fiber diameter decreases, the pore size of the fiber-fiber composite declines. Compression of the composite by calendaring will reduce the porosity of the composite and compress the fibers to further reduce pore size.

### The Majority Fibers

One or more types of fibers may be present as the majority fibers. Majority fibers useful in making the integrated paper of the present invention are any fibers that can be fibrillated into nanofibers that have a softening point at least about 25°C greater than that of the minority fibers such that upon heat or pressure, the majority fibers do not melt and foul the pore structure of the composite. The fibers preferably comprise organic polymeric fibers that are capable of being fibrillated. Fibrillated fibers are most preferred due to their exceptionally fine dimensions and potentially low cost. Such fibrillated fibers include, but are not limited to, polymers such as polyamide, acrylic, acrylonitrile; liquid crystal polymers such as VECTRAN® and ZYLON®, and the like; ion-exchange resins; engineered resins; cellulose; rayon; ramie; wool; silk; glass; metal; ceramic; other fibrous materials; or combinations thereof. Combinations of organic and inorganic fibers and/or whiskers whether fibrillated or not, are contemplated and within the scope of the invention. For example, glass, ceramic, or metal fibers and polymeric fibers may be used together. Glass or metal fibers can provide additional wet strength to the integrated paper. In a most preferred embodiment, fibrillated lyocell fibers are used due to their exceptionally fine dimensions and potentially low cost.

Fibrillatable cellulose fibers can be made by direct dissolution and spinning of wood pulp in an organic solvent, such as an amine oxide, and are known as lyocell fibers. Lyocell fibers have the advantage of being produced in a consistent, uniform manner, thus yielding reproducible results, which may not be the case for, for example, natural cellulose fibers. Further, the fibrils of lyocell are often curled. The curls provide a significant amount of fiber entanglement. As an added advantage, the fibrillated lyocell fibers may be produced in large quantities using equipment of modest capital cost. It will be understood that fibers other than cellulose may be fibrillated to produce extremely fine fibrils, such as for example, synthetic fibers, in particular, acrylic or polyacrylonitrile (PAN) fibers, or other cellulosic materials.

When produced by a wet laid process from fibers such as cellulose or polymer fibers, such nanofibers should have a Canadian Standard Freeness of less than or equal to about 100, preferably less than or equal to about 45, and most preferably less than or equal to about 0. However, it should be recognized that in some cases, Canadian Standard Freeness is not an ideal measure of fiber size, as in the case of extremely stiff fibers such as those produced from liquid crystal polymers such as VECTRAN®. In these cases, the fiber size should be directly assayed using microscopy. Preferably, a significant portion of the nanofibers should have an average fiber diameter less than or equal to about 1000 nanometers, more preferably less than or equal to about 400 nanometers, and nanofibers less than or equal to about 250 nanometers in diameter are most preferred.

It is preferable to chop the original fibers prior to fibrillation to a length of about 1 millimeter to about 8 millimeters, preferably about 2 millimeters to about 6 millimeters, and more preferably about 3 millimeters to about 4 millimeters, and to sustain this fiber length during the fibrillation process by avoiding excessive fiber cutting.

### The Minority Fibers

The minority fibers preferably have a softening point at least 25°C below that of the majority fibers, or of the majority fibers that have the lowest softening point. Preferably, the minority fibers are thermoset or thermoplastic materials. Fibers such as polyvinyl alcohol that dissolve at elevated temperatures in the presence of moisture are also useful as minority fibers.

The minority fibers can have average fiber diameters above and below the sub-micron range. As the fiber diameter of the minority fibers decrease, the amount of minority fibers needed to coalesce the majority fibers decrease provided that the minority fibers are well distributed amongst the majority fibers to provide the desirable degree of wet and dry strength. The pore structure of the fiber-fiber composite varies with the average fiber diameters of the majority and minority fibers. The pore structure of the composite can be further reduced when using minority fibers that shrink when heated as a result of a release of residual stress trapped within the fiber during the manufacturing process. This can pull the structure inward and make the pores smaller.

If the majority and minority fibers are similar in average fiber diameters, this leads to the highest porosity, the most uniform pore size, and the highest permeability in the resulting fiber-fiber composite. Thus, it is preferred, but not necessary, to fibrillate the minority fibers such that the minority fibers have similar Canadian Standard Freeness and dimensions as the majority fibers.

Useful minority fibers that can act as binder fibers include, but are not limited to, polyolefins, polyvinyl halides, polyvinyl esters, polyvinyl ethers, polyvinyl alcohols, polyvinyl sulfates, polyvinyl phosphates, polyvinyl amines, polyamides, polyimides, polyoxidiazoles, polytriazols, polycarbodiimides, polysulfones, polycarbonates, polyethers, polyarylene oxides, polyesters, polyarylates, phenol-formaldehyde resins, melamine-formaldehyde resins, formaldehyde-ureas, ethyl-vinyl acetate copolymers, co-polymers and block interpolymers thereof, and combinations thereof. Variations of the above materials and other useful polymers include the substitution of groups such as hydroxyl, halogen, lower alkyl groups, lower alkoxy groups, monocyclic aryl groups, and the like. Other potentially applicable materials include polymers such as polystyrenes and acrylonitrile-styrene copolymers, styrene-butadiene copolymers, and other non-crystalline or amorphous polymers and structures.

Other binders that may be useful in the present invention as minority fibers if available in fiber form include end-capped polyacetals, such as poly(oxymethylene) or polyformaldehyde, poly(trichloroacetaldehyde), poly(n-valeraldehyde), poly(acetaldehyde), and poly(propionaldehyde); acrylic polymers, such as polyacrylamide, poly(acrylic acid), poly(methacrylic acid), poly(ethyl acrylate), and poly(methyl methacrylate); fluorocarbon polymers, such as poly(tetrafluoroethylene), perfluorinated ethylenepropylene copolymers, ethylene-tetrafluoroethylene copolymers, poly(chlorotrifluoroethylene), ethylene-chlorotrifluoroethylene copolymers, poly(vinylidene fluoride), and poly(vinyl fluoride); polyamides, such as poly(6-aminocaproic acid) or poly(e-caprolactam), poly(hexamethylene adipamide), poly(hexamethylene sebacamide), and poly(11-aminoundecanoic acid); polyaramides, such as poly(imino-1,3-phenyleneiminoisophthaloyl) or poly(m-phenylene isophthalamide); parylenes, such as poly-2-xylylene, and poly(chloro-1-xylylene); polyaryl ethers, such as poly(oxy-2,6-dimethyl-1,4-phenylene) or poly(p-phenylene oxide); polyaryl sulfones, such as poly(oxy-1,4-phenylenesulfonyl-1,4-phenyleneoxy-1,4-phenyleneisopropylide ne-1,4-phenylene), and poly(sulfonyl-1,4-phenylene-oxy-1,4-phenylenesulfony14,4'-biphenylene); polycarbonates, such as poly-(bisphenol A) or poly(carbonyldioxy-1,4-phenyleneisopropylidene-1,4-phenylene); polyesters, such as poly(ethylene terephthalate), poly(tetramethylene terephthalate), and poly(cyclohexyl-ene-1,4-dimethylene terephthalate) or poly(oxymethylene-1,4-cyclohexylenemethyleneoxyterephthaloyl); polyaryl sulfides, such as poly(p-phenylene sulfide) or poly(thio-1,4-phenylene); polyimides, such as poly(pyromellitimido-1,4-phenylene); polyolefins, such as polyethylene, polypropylene, poly(1-butene), poly(2-butene), poly(1-pentene), poly(2-pentene), poly(3-methyl-1-pentene), and poly(4-methyl-1-pentene); vinyl polymers, such as poly(vinyl acetate), poly(vinylidene chloride), and poly(vinyl chloride); diene polymers, such as 1,2-poly-1,3-butadiene, 1,4-poly-1,3-butadiene, polyisoprene, and polychloroprene; polystyrenes; and copolymers of the foregoing, such as acrylonitrilebutadiene-styrene (ABS) copolymers. Polyolefins that may be useful include polyethylene, linear low density polyethylene, polypropylene, poly(1-butene), poly(2-butene), poly(1-pentene), poly(2-pentene), po ly(3-methyl-1-pentene), poly(4-methyl-1-pentene), and the like.

Preferred minority fibers include polyethylene, polypropylene, acrylic, polyester-polypropylene or polypropylene-polyethylene bi-component fibers, or others can be used as long as they have a softening point less than the lowest softening point of the majority fibers, and preferably at least about 25°C lower than the lowest softening point of the majority fibers. Certain types of treated polyethylene fibers, when properly treated, as described below, are optimal, and have the additional benefit of not significantly interfering with the hydrophilic nature of the resulting fiber-fiber composite when used in modest volumes. Preferred minority fibers include FYBREL® synthetic fibers, and/or SHORT STUFF® Grades EST-8 and/or E385F, all of which are polyolefin based. FYBREL® is a polyolefin based synthetic pulp that is a highly fibrillated fiber. FYBREL® has excellent thermal moldability and provides a smooth surface to the fiber-fiber composite. SHORT STUFF® Grades EST-8 and E385F are both highly fibrillated, high density polyethylene. All of these fibers are commercially available from MiniFibers, Inc., Pittsburgh, Pennsylvania. Preferred acrylic staple fibers can be obtained from Sterling Fibers, Inc., Pace, Florida, under the trade designation RES-25; Asahi Kasei Corporation, Tokyo, Japan, under the tradename CASHMILON^{™}; and/or Mitsubishi Rayon America, New York, New York, as a 3 millimeter length fibrillatable staple fiber.

Preferably, one or more types of minority fibers are present in a total amount of about 1% to about 20% by weight based on a total weight of the composite, more preferably about 4% to about 18%, and most preferably about 5% to about 15%. It is preferable that the binder material have a softening point that is significantly lower than a softening point of the majority fibers so that the composite can be heated to activate the binder fibers, while the composite does not melt and coalesce thereby losing porosity.

### Methods of Making the Fiber-Fiber Composite

The fiber-fiber composite of the present invention is preferably made using wet laid processes for speed and economies of scale.

In a preferred wet laid process, a fiber tow is chopped to a specific length, usually in the range of about 1 millimeter to about 8 millimeters and in particular in the range of about 3 millimeters to about 4 millimeters. The chopped fibers are fibrillated in a device having characteristics similar to a blender, or on a large scale, in machines commonly referred to as a "hi-low", a "beater" or a "refiner". The fiber is subjected to repetitive stresses, while further chopping and the reduction of fiber length is minimized. As the fibers undergo these stresses, the fibers split as a result of weaknesses between amorphous and crystalline regions and the Canadian Standard Freeness (CSF), which is determined by a method well known in the art, begins to decline. Samples of the resulting pulp can be removed at intervals, and the CSF used as an indirect measure of the extent of fibrillation. While the CSF value is slightly responsive to fiber length, it is strongly responsive to the degree of fiber fibrillation. Thus, the CSF, which is a measure of how easily water may be removed from the pulp, is a suitable means of monitoring the degree of fiber fibrillation whenever the fibers have a good tendency to form a wet-laid sheet. However, this is not necessarily the case when handling very stiff fibers such as those made from liquid crystal polymers such as VECTRAN®. If the surface area is very high, then very little water will be drained from the pulp in a given amount of time and the CSF value will become progressively lower as the fibers fibrillate more extensively. Preferably, fibrillation occurs at temperatures greater than about 30°C to accelerate the process. However, when fibrillating fibers such as acrylic, lower temperatures can be used to avoid softening the acrylic fibers. Enzymes may be added to further accelerate the fibrillation process.

The fibrillated fibers of a given CSF value can be directly used for producing the fiber-fiber composite or dewatered on a variety of different devices, including a dewatering press or belt, to produce a dewatered pulp. The dewatered pulp can be subsequently used to make a wet-laid fiber-fiber composite. Generally, for application in the present invention, a pulp with a CSF of below 100 is used, preferably, the CSF should be less than or equal to about 45, and more preferably less than or equal to about 0. A Canadian Standard Freeness below 0 is achieved when the fibers are fibrillated beyond the time needed to achieve a Canadian Standard Freeness of 0. The fibers can be directly sent to pulp preparation systems to create a furnish suitable for making the fiber-fiber composite.

To impart anti-microbial properties to the fiber-fiber composite, the fibrillated fibers can be treated with a microbiological interception enhancing agent. The fibers, or the fiber-fiber composite itself, can be chemically treated with any compatible microbiological interception enhancing agent known in the art, with or without a biologically active metal. Examples of suitable anti-microbial agents include, without limitation, any bactericidal agent, bacteriostatic agent, fungicidal agent, fungistatic agent, or the like, that are preferably efficacious against a broad spectrum of microbes. Specific examples of suitable bactericidal/bacteriostatic agents include, without limitation, POLYMYCIN^{™}, BACITRACIN^{™}, lysozyme, TRICLOSAN^{™}, DOWCIDE^{™}, quaternary amine salts, polyphenols, acid-anionic surfactants, amphoteric surfactant disinfectants, biguanidines, and the like. Specific examples of suitable fungicidal/fungistatic agents include, without limitation, dithiocarbamates, phthalimides, dicarboximides, organophosphates, benzimidazoles, carboxanilides, phenylamides, phosphites, and the like. A preferred microbiological interception enhancing agent is disclosed in co-pending U.S. Application Serial No. 10/286,695.

As set forth in U.S. Serial No. 10/286,695, now U.S. Patent No. 6,835,311, the microbiological interception enhancing agent is set forth beginning at column 7, line 24 to column 10, line 34, again incorporated herein by reference thereto. As set forth in claim 1 of U.S. Patent No. 6,835,311 the microbiological interception enhancing agent comprises a cationic metal complex comprising a cationic material adsorbed on at least a portion of the microporous structure, having an associated counter ion therewith, capable of imparting a positive charge on at least a portion of said microporous structure, and wherein a biologically active metal is caused to precipitate with at least a portion of the counter ion associated with the cationic material.

The fiber mixture can be directly sent to pulp preparation systems to create a furnish suitable for paper making.

Exemplary of a wet laid process includes mixing a pulp of fibrillated lyocell fibers having a Canadian Standard Freeness of about 0, with 12% by weight EST-8 binder fibers, and about 15% by weight MICROSTRAND® 110X-475 microglass fibers to form a slurry in deionized water. A furnish is formed with about 0.5% to about 2% consistency. It is preferable to add the microbiological interception enhancing agent to the slurry, if anti-microbial properties are desired in the fiber-fiber composite as described above. Next, this pulp is partially dewatered under vacuum and rinsed with deionized water to form a wet lap. Thereafter, the fiber slurry can be directly used in the production of the fiber-fiber composite. It is preferable to send the slurry directly into a paper making machine where the economies of scale are easily achieved in making an inexpensive fiber-fiber composite for use as a flat sheet medium.

The fiber-fiber composite can also be densified during the paper-making process by passing the fiber-fiber composite through a wet press or through the use of a calendar to achieve maximum density in the final product. Heated calendaring of the composite promotes fiber-fiber bonds resulting in a densified composite with minimal tendency to shed fibers.

### Exemplary Applications Of The Fiber-Fiber Composite

Many types of filtration devices and/or systems incorporating the fiber-fiber composite can be imagined. Described below are certain specific embodiments. However, these devices are exemplary and should not be construed as restricting the scope of the invention.

The fiber-fiber composite of the present invention can be used alone as flat sheet media in radial, axial or cross flow applications, and can also be used in a pleated or spiral wound configuration. The tight pore structure of the fiber-fiber composite provides a short diffusion path and, therefore, rapid diffusion kinetics of microbiological contaminants in a flowing fluid to the surface of the composite, yet retain exceptional flow with low pressure differential. The tight pore structure also provides supplemental direct mechanical interception of microbiological contaminants, greater than or equal to about 99.95% interception of particles having an average particle size of 3 to 5 microns when the mean pore size of the fiber-fiber composite is less than about 0.75 microns as determined using an Automated Capillary Flow Porometer available from Porous Materials, Inc., Ithaca, New York. Bacterial and viral interception can be further enhanced with treatment with any compatible anti-microbial agent. Furthermore, the fiber-fiber composite can be treated with hydrophobicity or hydrophilicity agents known in the prior art to provide the desired wetting characteristics.

When combined with other filter media, the fiber-fiber composite can be used as a prefiltration wrap around an activated carbon block filter medium. The condensed pore structure provides greater than or equal to about 99.95% interception of particles having an average particle size of 3 to 5 microns such that a carbon block that can only provide reduction in chorine, taste and odor can now provide mechanical interception of protozoan cysts such as Cryptosporidium and *Giardia* when used in conjunction with the fiber-fiber composite of the present invention.

The fiber-fiber composite can also be used as one or both substrates in a flat sheet medium such as PLEKX® available from KX Industries, L.P., Orange, Connecticut, and disclosed in United States Patent No. 5,792,513.

In the PLEKX^{®} "process", a mixture of active agents and particulate binder is laid on a substrate such as the fiber-fiber composite of the present invention. Should a water and vapor permeable top substrate be desirable, the fiber-fiber composite can be used as the top substrate of the PLEKX® material as well. The combined fiber-fiber composite PLEKX® product can be used as a flat sheet medium, pleated or spiral wound.

A particulate prefilter may be added upstream from the fiber-fiber composite to prolong the service life of the filtration system. Such particulate prefilter are known to one of skill in the art.

All configurations of the fiber-fiber composite with other types of filter media can be used in gravity or pressurize water filtration systems.

## Claims

1. Composite flat sheet medium comprising of:
majority fibers; and
minority fibers admixed with said majority fibers wherein said minority fibers have a softening point lower than said majority fibers such that when the admixture of majority fibers and minority fibers are wet laid to form a paper-like structure and subjected to a pressure and a temperature above the softening point of said minority fibers, said majority fibers and minority fibers form said composite having a mean pore diameter equal to or less than about 1 µm with a porosity of greater than about 35%, and a wet strength of greater than about 0.013 kg/mm.

2. Composite according to claim 1, **characterized in that** said majority fibers or said minority fibers comprise of nanofibers.

3. Composite according to claim 2, **characterized in that** the nanofibers comprise of glass, polymer, lyocell, cellulose, metal, ceramic, mineral, or combinations thereof.

4. Composite according to claim 1, **characterized in that** said majority fibers comprise glass, polymer, lyocell, cellulose, metal, ceramic, mineral, or combinations thereof.

5. Composite according to anyone of the foregoing claims, **characterized in that** said minority fibers comprise a thermoset or thermoplastic polymer.

6. Composite according to anyone of the foregoing claims, **characterized in that** said minority fibers comprise a polyolefin, polyvinyl alcohol, an acrylic, or combinations thereof.

7. Composite according to anyone of the foregoing claims, **characterized in that** the softening point of said minority fibers is at least 25°C lower than a softening point of said majority fibers.

8. Composite according to anyone of the foregoing claims, **characterized in that** the mean pore diameter of said composite is equal to or less than about 0.75 µm.

9. Composite according to anyone of the foregoing claims, **characterized in that** a bubble point of said composite is equal to or less than about 8 µm.

10. Composite according to anyone of the foregoing claims, further **characterized by** a microbiological interception enhancing agent.

11. Composite according to claim 10, **characterized in that** said microbiological interception enhancing agent comprises a cationic metal complex comprising a cationic material adsorbed on at least a portion of said medium, said cationic material having an associated counter ion therewith capable of imparting a positive charge on at least a portion of said medium, and wherein a biologically active metal is caused to precipitate with at least a portion of the counter ion associated with the cationic material.

12. Filtration system comprising of:
an activated carbon filter medium, in combination with a high wet strength nanofiber composite having a mean pore diameter of less than about 1 µm with a porosity of greater than about 35%, and a wet strength of greater than about 0.013 kg/mm,
wherein the nanofiber composite comprises of majority fibers; and minority fibers admixed with the majority fibers wherein the minority fibers have a softening point lower than the majority fibers such that when the admixture of majority fibers and minority fibers are subjected to a pressure and a temperature above the softening point of the minority fibers, the majority fibers are coalesced into said high wet strength composite.

13. Filtration system according to claim 12, **characterized in that** said activated carbon filter medium comprises a carbon block having a mean pore diameter of greater than about 1 µm and wherein said filtration system can remove protozoan cysts.

14. Filtration system according to claim 12, **characterized in that** said activated carbon filter medium comprises a flat sheet filter medium having immobilized therein activated carbon particles, alone or in combination with other active agents, between one or more substrates, or admixed with fibers to result in entanglement or bonds with the fibers within said activated carbon filter medium.

15. Filtration system according to claim 14, **characterized in that** said nanofiber composite is the one or more substrates of the flat sheet filter medium.

16. Filtration system according to claim 14 or 15, **characterized in that** said activated carbon filter medium is formed into a spiral wound or pleated flat sheet filter element.

17. Filtration system according to anyone of claims 12 to 16, **characterized in that** the majority fibers of said nanofiber composite comprise glass, polymer, lyocell, cellulose, metal, ceramic, mineral, or combinations thereof.

18. Filtration system according to anyone of claims 12 to 16, **characterized in that** the majority fibers of said nanofiber composite comprises lyocell.

19. Filtration system according to anyone of claims 12 to 18, **characterized by** a particulate prefilter.

20. Filtration system according to anyone of claims 12 to 18, **characterized in that** said nanofiber composite is a prefilter placed upstream of said activated carbon filter medium.

21. Filtration system according to anyone of claims 12 to 20, **characterized in that** either or both of said activated carbon filter medium and said nanofiber composite further includes a microbiological interception enhancing agent.

22. Filtration system according to claim 21, **characterized in that** said microbiological interception enhancing agent comprises a cationic metal complex comprising a cationic material adsorbed on at least a portion of either or both of said activated carbon filter medium and said nanofiber composite, said cationic material having an associated counter ion therewith capable of imparting a positive charge on at least a portion of either or both of said activated carbon filter medium and said nanofiber composite, and wherein a biologically active metal is caused to precipitate with at least a portion of the counter ion associated with the cationic material.

23. Filtration system according to anyone of claims 12 to 22, **characterized in that** said nanofiber composite has a mean flow path of less than about 1 µm, and a bubble point equal to or less than about 8 µm.

24. Method of removing microbiological contaminants from a contaminated liquid comprising the steps of:
providing a filter medium having a microporous structure medium comprising a fiber-fiber composite having a mean pore diameter equal to or less than about 1 µm with a porosity of greater than about 35%, and a wet strength of greater than about 0.013 kg/mm, the composite formed from a wet laid admixture of majority fibers and minority fibers, wherein the minority fibers have a softening point lower than the majority fibers such that when the admixture of majority fibers and minority fibers are subjected to a pressure and a temperature above the softening point of the minority fibers, the majority fibers and minority fibers form a paper-like structure with a porosity of greater than about 40%;
contacting the contaminated liquid with the composite; and
removing 99.95 % of contaminants having an average particle size greater than about 3 to about 5 µm.

25. Method according to claim 24, **characterized in that** in the step of providing a filter medium, the filter medium further includes an activated carbon filter medium.

26. Method according to claim 24 or 25, **characterized in that** in the step of providing a filter medium, the filter medium further includes an activated carbon block.

27. Method according to claim 26, **characterized in that** in the step of providing a filter medium, the fiber-fiber composite is wrapped around the activated carbon block.

28. Method according to claim 26, **characterized in that** in the step of providing a filter medium, the fiber-fiber composite is spiral wound and inserted within a core of the activated carbon block.

29. Method according to claim 24 or 25, **characterized in that** in the step of providing a filter medium, the filter medium further includes a flat sheet medium comprising activated carbon particles immobilized on a substrate.

30. Method according to claim 29, **characterized in that** in the step of providing a filter medium, the fiber-fiber composite is a substrate of the flat sheet medium.

31. Method according to anyone of claims 24 to 30, **characterized in that** in the step of providing a filter medium, the filter medium further includes a particulate prefilter.

32. Method according to anyone of claim 24 to 30, **characterized in that** in the step of providing a filter medium, the fiber-fiber composite is a prefilter.

33. Method according to anyone of claims 24 to 32, **characterized in that** in the step of providing a filter medium, the filter medium further includes a microbiological interception enhancing agent.

34. Method according to anyone of claims 24 to 33, **characterized in that** in the step of providing a filter medium, the fiber-fiber composite is one of pleated or spiral wound.

35. Method according to anyone of claims 24 to 34, **characterized in that** in the step of providing a filter medium, the fiber-fiber composite is treated with a microbiological interception enhancing agent.

36. Method according to claim 33 or 35, **characterized in that** said microbiological interception enhancing agent comprises a cationic metal complex comprising a cationic material adsorbed on at least a portion of said medium or composite, said cationic material having an associated counter ion therewith capable of imparting a positive charge on at least a portion of said medium or composite, and wherein a biologically active metal is caused to precipitate with at least a portion of the counter ion associated with the cationic material.

## Patentansprüche

1. Verbundwerkstoff in Form eines flachen, flächenartigen Mediums, umfassend eine Fasermehrheit und eine Faserminderheit, die der Fasermehrheit zugemischt sind, wobei die Faserminderheit einen Erweichungspunkt hat, der unter demjenigen der Fasermehrheit liegt, so daß dann, wenn die Zumischung der Fasermehrheit und die Faserminderheit zur Bildung einer papierähnlichen Strukturmasse erfolgt und einem Druck sowie einer Temperatur über dem Erweichungspunkt der Faserminderheit unterworfen wird, die Fasermehrheit und die Faserminderheit den Verbundwerkstoff bilden, der einen mittleren Porendurchmesser hat, welcher gleich oder kleiner ist als etwa 1 µm bei einer Porosität größer als etwa 35 % und einer Naßfestigkeit größer als etwa 0,013 kg/mm.

2. Verbundwerkstoff nach Anspruch 1, **dadurch gekennzeichnet, daß** die Fasermehrheit oder die Faserminderheit Nanofasern bilden.

3. Verbundwerkstoff nach Anspruch 2, **dadurch gekennzeichnet, daß** die Nanofasern Glas, Polymer, Lyocell, Zellulose, Metall, Keramik, Mineral oder deren Kombination bilden.

4. Verbundwerkstoff nach Anspruch 1, **dadurch gekennzeichnet, daß** die Fasermehrheit Glas, Polymer, Lyocell, Zellulose, Metall, Keramik, Mineral oder deren Kombination aufweist.

5. Verbundwerkstoff nach einem der vorhergehenden Ansprüche, **dadurch gekennzeichnet, daß** die Faserminderheit ein wärmehärtbares oder thermoplastisches Polymer bildet.

6. Verbundwerkstoff nach einem der vorhergehenden Ansprüche, **dadurch gekennzeichnet, daß** die Faserminderheit Polyolefin, Polyvinylalkohol, ein Acryl oder deren Kombinationen aufweist.

7. Verbundwerkstoff nach einem der vorhergehenden Ansprüche, **dadurch gekennzeichnet, daß** der Erweichungspunkt der Faserminderheit wenigstens 25 °C unter einem Erweichungspunkt der Fasermehrheit liegt.

8. Verbundwerkstoff nach einem der vorhergehenden Ansprüche, **dadurch gekennzeichnet, daß** der mittlere Porendurchmesser des Verbundwerkstoffes gleich oder kleiner ist als etwa 0,75 µm.

9. Verbundwerkstoff nach einem der vorhergehenden Ansprüche, **dadurch gekennzeichnet, daß** ein Blasenbildungspunkt des Verbundwerkstoffes gleich oder weniger als etwa 8 µm beträgt.

10. Verbundwerkstoff nach einem der vorhergehenden Ansprüche, **gekennzeichnet durch** ein die mikrobiologische Unterbrechung verstärkendes Mittel.

11. Verbundwerkstoff nach Anspruch 10, **dadurch gekennzeichnet, daß** das die mikrobiologische Unterbrechung verstärkende Mittel ein kationisches Metallkomplex aufweist, das ein kationisches Material besitzt, welches auf wenigstens einem Teil des Mittels adsorbiert wird, wobei dieses kationische Material ein ihm zugeordnetes Gegenion aufweist, das in der Lage ist, auf wenigstens einem Teil des Mittels eine positive Ladung auszubilden, und wobei ein biologisch aktives Metall dazu gebracht wird, wenigstens einen Teil des Gegenions, das dem kationischen Material zugeordnet ist, abzuscheiden.

12. Filtriersystem, umfassend ein aktiviertes Kohlenstoff-Filtermittel in Verbindung mit einem hochnaßfesten Nanofaser-Verbundwerkstoff, der einen mittleren Porendurchmesser von weniger als etwa 1 µm mit einer Porosität größer als etwa 35 % und einer Naßfestigkeit größer als etwa 0,0143 kg/mm aufweist, wobei der Nanoverbund-Werkstoff eine Fasermehrheit besitzt und eine Faserminderheit der Fasermehrheit zugemischt ist und wobei die Faserminderheit einen Erweichungspunkt aufweist, der niedriger liegt als der der Fasermehrheit, so daß dann, wenn das Gemisch aus der Fasermehrheit und Faserminderheit einem Druck ausgesetzt wird sowie einer Temperatur über dem Erweichungspunkt der Faserminderheit, die Fasermehrheit zu dem hochnaßfesten Verbundwerkstoff koaliert.

13. Filtriersystem nach Anspruch 12, **dadurch gekennzeichnet, daß** das aktivierte Kohlenstoff-Filtermittel einen Kohlenstoffblock aufweist, der einen mittleren Bohrungsdurchmesser von größer als etwa 1 µm besitzt, und daß das Filtriersystem Protozoonzysten empfangen kann.

14. Filtriersystem nach Anspruch 12, **dadurch gekennzeichnet, daß** das aktivierte Kohlenstoff-Filtermittel ein flaches Bandfiltermittel bildet, in dem sich immobilisierte, aktivierte Kohlenstoffteilchen befinden, und zwar allein oder in Kombination mit anderen aktiven Stoffen und zwischen einem oder mehreren Substraten oder mit Fasern vermischt, so daß sich Verflechtungen oder Bindungen mit den Fasern innerhalb des aktivierten Kohlenstoff-Filtermittels ergeben.

15. Filtriersystem nach Anspruch 14, **dadurch gekennzeichnet, daß** der Nanofaser-Verbundstoff ein oder mehrere Substrate des flachen Bandfiltermittels ist.

16. Filtriersystem nach Anspruch 14 oder 15, **dadurch gekennzeichnet, daß** das aktivierte Kohlenstoff-Filtermittel zu einem spiralförmig gewickelten oder gefalteten, flachen Bandfilterelement ausgebildet ist.

17. Filtriersystem nach einem der Ansprüche 12 bis 16, **dadurch gekennzeichnet, daß** die Mehrheit der Fasern des Nanofaser-Verbundwerkstoffs Glas, Polymer, Lyocell, Zellulose, Metall, Keramik, Mineral oder deren Kombinationen aufweist.

18. Filtriersystem nach einem der Ansprüche 12 bis 16, **dadurch gekennzeichnet, daß** die Mehrheit der Fasern des Nanofaser-Verbundwerkstoffs Lyocell aufweist.

19. Filtriersystem nach einem der Ansprüche 12 bis 18, **gekennzeichnet durch** ein teilchenförmiges Vorfilter.

20. Filtriersystem nach einem der Ansprüche 12 bis 18, **dadurch gekennzeichnet, daß** der Nanofaser-Verbundwerkstoff ein Vorfilter ist, das zustromseitig des aktivierten Kohlenstoff-Filtermittels angeordnet ist.

21. Filtriersystem nach einem der Ansprüche 12 bis 20, **dadurch gekennzeichnet, daß** entweder das aktivierte Kohlenstoff-Filtermittel oder der Nanofaser-Verbundwerkstoff oder sowohl das aktivierte Kohlenstoff-Filtermittel als auch der Nanofaser-Verbundwerkstoff des weiteren ein die mikrobiologische Hemmung verstärkendes Mittel aufweist.

22. Filtriersystem nach Anspruch 21, **dadurch gekennzeichnet, daß** das die mikrobiologische Hemmung verstärkende Mittel ein kationisches Metallkomplex aufweist, das ein kationisches Material besitzt, welches auf wenigstens einem Teil entweder des aktivierten Kohlenstoff-Filtermittels oder des Nano-Verbundwerkstoffs oder sowohl des aktivierten Kohlenstoff-Filtermittels als auch des Nano-Verbundwerkstoffs absorbiert wird, und daß das kationische Material mit einem ihm zugeordneten Gegenion versehen ist, welches in der Lage ist, auf wenigstens einen Teil entweder des aktivierten Kohlenstoff-Filtermittels oder des Nanofaser-Verbundwerkstoffs oder auf beide, also sowohl des aktivierten Kohlenstoff-Filtermittels als auch des Nanofaser-Verbundwerkstoffs, eine positive Ladung zu übertragen, und daß ein biologisch aktives Metall veranlaßt wird, sich mit wenigstens einem Teil des Gegenions, das dem kationischen Material zugeordnet ist, abzuscheiden.

23. Filtriersystem nach einem der Ansprüche 12 bis 22, **dadurch gekennzeichnet, daß** der Nanofaser-Verbundwerkstoff einen mittleren Strömungsweg von weniger als etwa 1 µm sowie einen Blasenbildungspunkt aufweist, der gleich oder weniger als etwa 8 µm beträgt.

24. Verfahren zur Entfernung von mikrobiologischen Verschmutzungen aus einer verschmutzten Flüssigkeit, umfassend die folgenden Schritte: Schaffen eines Filtermittels mit einer mikroporösen Struktur, das einen Faser-Faser-Verbundwerkstoff bildet, der einen mittleren Porendurchmesser besitzt, welcher gleich oder kleiner ist als etwa 1 µm mit einer Porosität größer als etwa 35 % und einer Naßfestigkeit größer als etwa 0,013 kg/mm, wobei der Verbundwerkstoff aus einem naß gelegten Gemisch aus Fasermehrheit und Faserminderheit gebildet wird, und die Faserminderheit einen Erweichungspunkt aufweisen, der niedriger liegt als derjenige der Fasermehrheit, so daß dann, wenn das Gemisch aus Fasermehrheit und Faserminderheit einem Druck und einer Temperatur ausgesetzt wird, die über dem Erweichungspunkt der Faserminderheit liegt, die Fasermehrheit und Faserminderheit eine papierähnliche Struktur mit einer Porosität größer als etwa 40 % bilden; Kontaktieren der verschmutzten Flüssigkeit mit dem Verbundwerkstoff und Entfernen von 99,95 % der Verschmutzungsstoffe, die eine durchschnittliche Teilchengröße größer als etwa 3 bis etwa 5 µm aufweisen.

25. Verfahren nach Anspruch 24, **dadurch gekennzeichnet, daß** beim Schritt der Schaffung eines Filtermittels das Filtermittel des weiteren ein aktiviertes Kohlenstoff-Filtermittel aufweist.

26. Verfahren nach Anspruch 24 oder 25, **dadurch gekennzeichnet, daß** beim Schritt der Schaffung eines Filtermittels das Filtermittel einen aktivierten Kohlenstoffblock aufweist.

27. Verfahren nach Anspruch 26, **dadurch gekennzeichnet, daß** beim Schritt der Schaffung eines Filtermittels der Faser-Faser-Verbundwerkstoff um den aktivierten Kohlenstoffblock gewickelt wird.

28. Verfahren nach Anspruch 26, **dadurch gekennzeichnet, daß** beim Schritt der Schaffung eines Filtermittels der Faser-Faser-Verbundwerkstoff spiralförmig gewickelt wird und in einen Kern des aktivierten Kohlenstoffblocks gesteckt wird.

29. Verfahren nach Anspruch 24 oder 25, **dadurch gekennzeichnet, daß** beim Schritt der Schaffung eines Filtermittels das Filtermittels des weiteren einen flachen, bandförmigen Stoff bildet, der aktivierte Kohlenstoffteilchen enthält, die auf einem Substrat immobilisiert sind.

30. Verfahren nach Anspruch 29, **dadurch gekennzeichnet, daß** beim Schritt der Schaffung eines Filtermittels der Faser-Faser-Verbundwerkstoff ein Substrat des flachen bandförmigen Stoffes ist.

31. Verfahren nach einem der Ansprüche 24 bis 30, **dadurch gekennzeichnet, daß** beim Schritt der Schaffung eines Filtermittels das Filtermittel des weiteren einen teilchenförmigen Vorfilter enthält.

32. Verfahren nach einem der Ansprüche 24 bis 30, **dadurch gekennzeichnet, daß** beim Schritt der Schaffung eines Filtermittels der Faser-Faser-Verbundwerkstoff ein Vorfilter ist.

33. Verfahren nach einem der Ansprüche 24 bis 32, **dadurch gekennzeichnet, daß** beim Schritt der Schaffung eines Filtermittels das Filtermittel des weiteren einen die mikrobiologische Hemmung verstärkenden Stoff aufweist.

34. Verfahren nach einem der Ansprüche 24 bis 33, **dadurch gekennzeichnet, daß** beim Schritt der Schaffung eines Filtermittels der Faser-Faser-Verbundwerkstoff gefaltet oder spiralförmig gewickelt wird.

35. Verfahren nach einem der Ansprüche 24 bis 34, **dadurch gekennzeichnet, daß** beim Schritt der Schaffung eines Filtermittels der Faser-Faser-Verbundwerkstoff mit einem die mikrobiologische Hemmung verstärkenden Stoff behandelt wird.

36. Verfahren nach Anspruch 33 oder 35, **dadurch gekennzeichnet, daß** der die mikrobiologische Hemmung verstärkende Stoff ein kationisches Metallkomplex aufweist, das ein kationisches Material beinhaltet, das auf wenigstens einem Teil des Stoffes oder des Verbundwerkstoffs adsorbiert wird, daß das kationische Material mit einem zugehörigen Gegenion versehen ist, welches in der Lage ist, auf wenigstens einen Teil des Stoffes oder Verbundwerkstoffes eine positive Ladung zu übertragen, und daß ein biologisch aktives Metall veranlaßt wird, sich mit wenigstens einem Teil des Gegenions, der zu dem kationischen Material gehört, abzuscheiden.

## Revendications

1. Produit composite en feuille plane, comprenant :
des fibres majoritaires ; et
des fibres minoritaires mélangées avec lesdites fibres majoritaires, de sorte que lesdites fibres minoritaires présentent un point de ramollissement inférieur à celui desdites fibres majoritaires, de façon que quand le mélange de fibres majoritaires de fibres minoritaires est posé à l'état mouillé pour former une structure analogue du papier et
soumis à une pression et à une température au-dessus du point de ramollissement desdites fibres minoritaires, lesdites fibres majoritaires et lesdites fibres minoritaires forment ledit composite ayant un diamètre de pores moyen égal ou inférieur à environ 1 µm avec une porosité supérieure à environ 35 %, et une résistance à l'état mouillé supérieure à environ 0,013 kg/mm.

2. Produit composite selon la revendication 1, **caractérisé en ce que** lesdites fibres majoritaires ou lesdites fibres minoritaires comprennent des nanofibres.

3. Produit composite selon la revendication 2, **caractérisé en ce que** les nanofibres comprennent du verre, polymères, lyocellules, cellulose, métal, céramique, minéraux, ou leurs combinaisons.

4. Produit composite selon la revendication 1, **caractérisé en ce que** lesdites fibres majoritaires comprennent du verre, polymères, lyocellules, cellulose, métal, céramique, minéraux, ou leurs combinaisons.

5. Produit composite selon l'une quelconque des revendications précédentes, **caractérisé en ce que** lesdites fibres minoritaires comprennent un polymère thermodurcissable ou thermoplastique.

6. Produit composite selon l'une quelconque des revendications précédentes, **caractérisé en ce que** lesdites fibres minoritaires comprennent une polyoléfine, un polyvinyle alcool, un produit acrylique, ou leurs combinaisons.

7. Produit composite selon l'une quelconque des revendications précédentes, **caractérisé en ce que** le point de ramollissement desdites fibres minoritaires est au moins 25°C inférieur au point de ramollissement desdites fibres majoritaires.

8. Produit composite selon l'une quelconque des revendications précédentes, **caractérisé en ce que** le diamètre de pores moyen dudit produit composite est égal ou inférieur à environ 0,75 µm.

9. Produit composite selon l'une quelconque des revendications précédentes, **caractérisé en ce qu'**un point de bullage dudit produit composite est égal ou inférieur à environ 8 micromètres.

10. Produit composite selon l'une quelconque des revendications précédentes, **caractérisé en outre par** un agent renforçant l'interception microbiologique.

11. Produit composite selon la revendication 10, **caractérisé en ce que** ledit agent renforçant l'interception microbiologique comprend un complexe métallique cationique comprenant un matériau cationique adsorbé sur au moins une portion dudit produit, ledit matériau cationique ayant un ion antagoniste associé à lui-même capable d'imposer une charge positive sur au moins une portion dudit produit, et dans lequel un métal biologiquement actif est amené à se précipiter avec au moins une portion de l'ion antagoniste associé au matériau cationique.

12. Système de filtration comprenant :
un produit filtrant à charbon actif, en combinaison avec un composite à nanofibres à haute résistance à l'état mouillé ayant un diamètre de pores moyen inférieur à environ chiffre 1 µm et une porosité supérieure à environ 35 %, et une résistance à l'état mouillé supérieure à environ 0,013 kg/mm,
dans lequel le composite à nanofibres comprend des fibres majoritaires et des fibres minoritaires mélangées avec les fibres majoritaires de façon que les fibres minoritaires ont un point de ramollissement inférieur à celui des fibres majoritaires de telle sorte que quand le mélange de fibres majoritaires et de fibres minoritaires est soumis à une pression et le une température au-dessus du point de ramollissement des fibres minoritaires, les fibres majoritaires sont amenées en coalescence dans ledit composite à haute résistance à l'état mouillé.

13. Système de filtration selon la revendication 12, **caractérisé en ce que** ledit produit filtrant à charbon actif comprend un bloc de charbon ayant un diamètre de pores moyen supérieur à environ 1 µm et dans lequel ledit système de filtration est capable de supprimer des kystes de protozoaires.

14. Système de filtration selon la revendication 12, **caractérisé en ce que** ledit produit filtrant à charbon actif comprend un produit filtrant en feuille plane dans lequel sont immobilisées des particules de charbon actif, seules ou en combinaison avec d'autres agents actifs, entre un ou plusieurs substrats, ou mélangées avec des fibres pour donner en résultat un entremêlement ou des liaisons avec les fibres dans ledit produit filtrant à charbon actif.

15. Système de filtration selon la revendication 14, **caractérisé en ce que** ledit composite à nanofibres forme le substrat ou les plusieurs substrats du produit filtrant en feuille plane.

16. Système de filtration selon la revendication 14 ou 15, **caractérisé en ce que** ledit produit filtrant à charbon actif est formé en un enroulement spiralé ou en un élément filtrant en feuille plane plissée.

17. Système de filtration selon l'une quelconque des revendications 12 à 16, **caractérisé en ce que** les fibres majoritaires dudit composite à nanofibres comprennent du verre, polymères, lyocellules, cellulose, métal, céramique, minéraux, ou leurs combinaisons.

18. Système de filtration selon l'une quelconque des revendications 12 à 16, **caractérisé en ce que** les fibres majoritaires dudit composite à nanofibres comprennent des lyocellules.

19. Système de filtration selon l'une quelconque des revendications 12 à 18, **caractérisé par** un préfiltre à particules.

20. Système de filtration selon l'une quelconque des revendications 12 à 18, **caractérisé en ce que** ledit composite à nanofibres est un préfiltre placé en amont dudit produit filtrant à charbon actif.

21. Système de filtration selon l'une quelconque des revendications 12 à 20, **caractérisé en ce que** soit ledit produit filtrant à charbon actif soit ledit composite à nanofibres soit encore les deux incluent encore un agent améliorant l'interception microbiologique.

22. Système de filtration selon la revendication 21, **caractérisé en ce que** ledit agent améliorant l'interception microbiologique comprend un complexe métallique cationique comprenant un matériau cationique adsorbé sur au moins une portion soit dudit produit filtrant à charbon actif soit dudit composite à nanofibres, soit encore des deux, ledit matériau cationique étant associé avec un ion antagoniste capable d'imposer une charge positive sur au moins une portion soit dudit produit filtrant à charbon actif soit dudit composite à nanofibres soit encore des deux, et dans lequel un métal biologiquement actif est amené à se précipiter avec au moins une portion de l'ion antagoniste associé avec le matériau cationique.

23. Système de filtration selon l'une quelconque des revendications 12 à 22, **caractérisé en ce que** ledit composite à nanofibres présente un trajet d'écoulement moyen inférieur à environ 1 µm, et un point de bullage égal ou inférieur à environ 8 µm.

24. Procédé pour supprimer des contaminants microbiologiques hors d'un liquide contaminé, comprenant les étapes consistant à :
fournir un produit filtrant ayant une structure microporeuse comprenant un composite fibres/fibres ayant un diamètre de pores moyen égal ou inférieur à environ 1 µm avec une porosité supérieure à environ 35 %, et une résistance à l'état mouillé supérieure à environ 0,013 kg/mm, le composite étant formé d'un mélange, posé à l'état mouillé, de fibres majoritaires et de fibres minoritaires, dans lequel les fibres minoritaires ont un point de ramollissement inférieur à celui des fibres majoritaires de telle sorte que quand le mélange de fibres majoritaires et de fibres minoritaires est soumis à une pression et une température au-dessus du point de ramollissement des fibres minoritaires, les fibres majoritaires et les fibres minoritaires forment une structure semblable à du papier avec une porosité supérieure à environ 40 % ;
mettre en contact le liquide contaminé avec le composite ; et
supprimer 99,95 % des contaminants ayant une taille de particules moyenne supérieure à environ 3 à environ 5 µm.

25. Procédé selon la revendication 24, **caractérisé en ce que** dans l'étape consistant à fournir un produit filtrant, le produit filtrant inclut encore un filtre à charbon actif.

26. Procédé selon la revendication 24 ou 25, **caractérisé en ce que**, dans l'étape consistant à fournir un produit filtrant, le produit filtrant inclut encore un bloc de charbon actif.

27. Procédé selon la revendication 26, **caractérisé en ce que** dans l'étape consistant à fournir un produit filtrant, le composite fibres/fibres est enroulé autour du bloc de charbon actif.

28. Procédé selon la revendication 26, **caractérisé en ce que** dans l'étape consistant à fournir un produit filtrant, le composite fibres/fibres est enroulé en spirale et introduit dans un noyau du bloc de charbon actif.

29. Procédé selon la revendication 24 ou 25, **caractérisé en ce que** dans l'étape consistant à fournir un produit filtrant, le produit filtrant inclut en outre un produit en feuille plane qui comprend des particules de charbon actif immobilisées sur un substrat.

30. Procédé selon la revendication 29, **caractérisé en ce que** dans l'étape consistant à fournir un produit filtrant, le composite fibres/fibres est un substrat du produit en feuille plane.

31. Procédé selon l'une quelconque des revendications 24 à 30, **caractérisé en ce que** dans l'étape consistant à fournir un produit filtrant, le produit filtrant inclut en outre un préfiltre à particules.

32. Procédé selon l'une quelconque des revendications 24 à 30, **caractérisé en ce que** dans l'étape consistant à fournir un produit filtrant, le composite fibres/fibres est un préfiltre.

33. Procédé selon l'une quelconque des revendications 24 à 32, **caractérisé en ce que** dans l'étape consistant à fournir un produit filtrant, le produit filtrant inclut en outre un agent améliorant l'interception microbiologique.

34. Procédé selon l'une quelconque des revendications 24 à 33, **caractérisé en ce que** dans l'étape consistant à fournir un produit filtrant, le composite fibres/fibres est soit plissé soit enroulé en spirale.

35. Procédé selon l'une quelconque des revendications 24 à 34, **caractérisé en ce que** dans l'étape consistant à fournir un produit filtrant, le composite fibres/fibres est traité avec un agent améliorant l'interception microbiologique.

36. Procédé selon la revendication 33 ou 35, **caractérisé en ce que** ledit agent améliorant l'interception microbiologique comprend un complexe métallique cationique comprenant un matériau cationique adsorbé sur au moins une portion dudit produit ou composite, ledit matériau cationique étant associé avec un ion antagoniste capable d'imposer une charge positive sur au moins une portion dudit produit ou composite, et dans lequel un métal biologiquement actif est amené à se précipiter avec au moins une portion de l'ion antagoniste associé avec le matériau cationique.
